# EUROPEAN PATENT APPLICATION

(11) **EP 1 790 887 A1**
(43) Date of publication of application: **30.05.2007**
(21) Application number: 06124883.7
(22) Date of filing: 28.11.2006
(51) Int. Cl.: F16J 15/447

(54) **Apparatus and method for steam turbine variable clearance packing**

(30) Priority: 29.11.2005 US 289163
(71) Applicant: General Electric Company, Schenectady, NY 12345 (US)
(72) Inventor: Chevrette, Richard Jon, Troy, NY 12180 (US)
(74) Representative: Bedford, Grant Richard

(57) **Abstract**

Disclosed herein is a packing ring assembly (20) having a first packing ring segment (22), a second packing ring segment (24), a third packing ring segment (26), a fourth packing ring segment (28), a first half of a stationary component, a second half of a stationary component, and one or more seal keys (46). The first packing ring segment (22) and the second packing ring segment (24) are disposed within the first half of a stationary component. The third packing ring segment (26) and the fourth packing ring segment (28) are disposed within the second half of a stationary component. The seal keys (46) are disposed at a midline between the first half and the second half of the stationary component such that each of the seal keys (46) supports the first or second packing ring segment (22) (24).

## Description

This application relates generally to steam turbines, and more specifically, to seals between rotating and stationary components of a steam turbine.

In rotary machines such as turbines, seals are provided between rotating and stationary components. For example, in steam turbines it is customary to provide a plurality of arcuate packing ring segments (sometimes referred to as seal ring segments) to form a labyrinth seal between the stationary and rotating components. Typically, the arcuate packing ring segments are disposed in an annular groove in the stationary component concentric to the axis of rotation of the machine and hence concentric to the sealing surface of the rotating component. Each arcuate seal segment carries an arcuate seal face in opposition to the sealing surface of the rotating component. In labyrinth type seals, the seal faces carry a radially directed array of axially spaced teeth, and which teeth are radially spaced from an array of axially spaced annular teeth forming the sealing surface of the rotating component. The sealing function is achieved by creating turbulent flow of a working media, for example, steam, as it passes through the relatively tight clearances within the labyrinth defined by the seal face teeth and the opposing surface of the rotating component.

The ability to maintain proper clearances without physical contact between the rotating equipment and stationary components allows for the formation of an effective seal. If this radial clearance between the seal faces of the segments and the opposing seal surfaces of the rotating component becomes too large, less turbulence is produced and the sealing action is compromised. Conversely, if the clearance is too tight, the sealing teeth may contact the rotating element, with the result that the teeth lose their sharp profile and tight clearance and thereafter create less turbulence, likewise compromising the sealing action. Therefore, because greater clearance is required at transient operating conditions of the turbine than at design point/steady state operating conditions, variable clearance packing rings are desirable.

Disclosed herein is a packing ring assembly having a first packing ring segment, a second packing ring segment, a third packing ring segment, a fourth packing ring segment, a first half of a stationary component, a second half of a stationary component, and one or more seal keys. The first packing ring segment and the second packing ring segment are located within the first half of a stationary component. The third packing ring segment and the fourth packing ring segment are located within the second half of a stationary component. The seal keys are located at a midline between the first half and the second half of the stationary component such that each of the seal keys supports the first or second packing ring segment.

Further disclosed herein is a steam turbine having a shaft, a stationary component, a packing ring assembly, and one or more seal keys. The packing ring assembly has a first packing ring segment, a second packing ring segment, a third packing ring segment, and a fourth packing ring segment. The first and second packing ring segments are located within a first half of the stationary component. The third and fourth packing ring segments are located within a second half of the stationary component. The seal keys are located at a midline between the first half and the second half of the stationary component such that each of the seal keys supports the first or second packing ring segment.

Yet further disclosed herein is a method for maintaining proper operation of a labyrinth seal between a rotor shaft and a stationary component of a rotary machine A first packing ring segment and a second packing ring segment are attached to a first half of a stationary component. A third packing ring segment and a fourth packing ring segment are attached to a second half of a stationary component. One or more seal keys are attached to the first half of the stationary component such that each of the seal keys supports and contains the first or second packing ring segment within the first half of the stationary component and permits the third or fourth packing ring segments to travel radially from the rotor shaft within the second half of the stationary component.

Referring to the exemplary drawings wherein like elements are numbered alike in the accompanying Figures:
FIGURE 1 is a section view of a portion of a steam turbine for use in accordance with an embodiment of the invention;
FIGURE 2 is an enlarged view of the exemplary steam turbine of Figure 1 for use in accordance with an embodiment of the invention;
FIGURE 3 is a cross-section view of the exemplary steam turbine of Figure 2 for use in accordance with an embodiment of the invention.

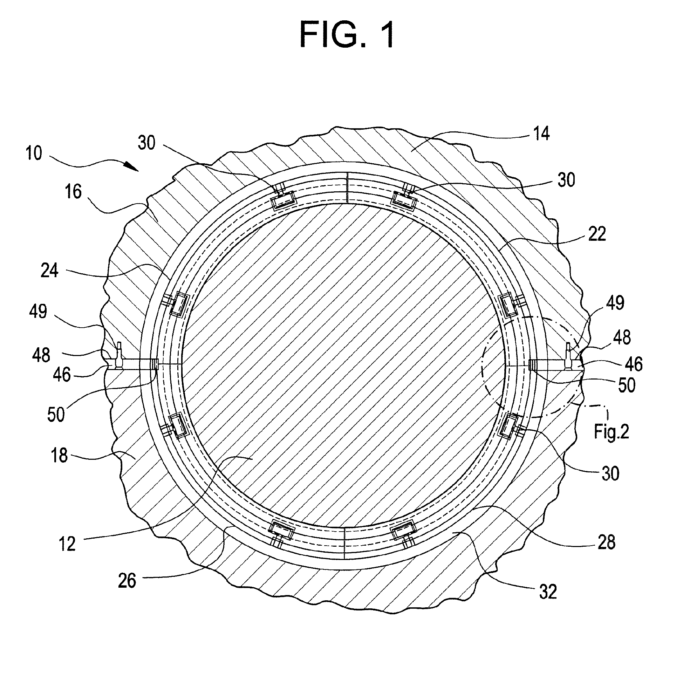

Referring to Figure 1, a portion of a steam turbine 10 is illustrated having a turbine shaft 12 disposed in a stationary component, for example a turbine diaphragm 14 comprising first and second diaphragm halves 16 and 18, respectively. A labyrinth seal is provided at the turbine shaft-to-diaphragm interface to prevent leakage. The labyrinth seal includes a packing ring assembly 20, sometimes referred to as a seal ring assembly, as shown in Figure 1 having four arcuate segments extending around the turbine shaft 12. The packing ring segments are arranged such that the first packing ring segment 22 and the second packing ring segment 24 are disposed on a first side of a midline between the first diaphragm half 16 and the second diaphragm half 18, while the third packing ring segment 26 and the fourth packing ring segment 28 are disposed on a second side of the midline between the first diaphragm half 16 and the second diaphragm half 18. It will be appreciated that in the assembly of Figure 1, and the remaining figures, the segments comprise positive pressure, variable clearance packing ring segments movable between open outermost large clearance and closed innermost small clearance positions about the turbine shaft 12 at startup and at speed operations, respectively. The packing ring segments may be moved to their open, outermost largest diameter positions by springs 30 disposed within the packing ring segments. To displace the packing ring segments into their closed smaller diameter position, a plurality of passages (not shown) are provided in the diaphragm or the packing ring segment to introduce the flowing medium, for example, steam, along the outer face of the packing ring segments whereby the packing ring segments may be displaced inwardly toward the turbine shaft 12 against the bias of the springs 30. This type of positive pressure variable clearance packing ring segment is further disclosed, and hereby incorporated by reference, in EP 06124644.3, GE Docket No. 193439, Cantor Colburn LLP Docket No. GS1-0202, titled Variable Clearance Packing Ring Arrangement.

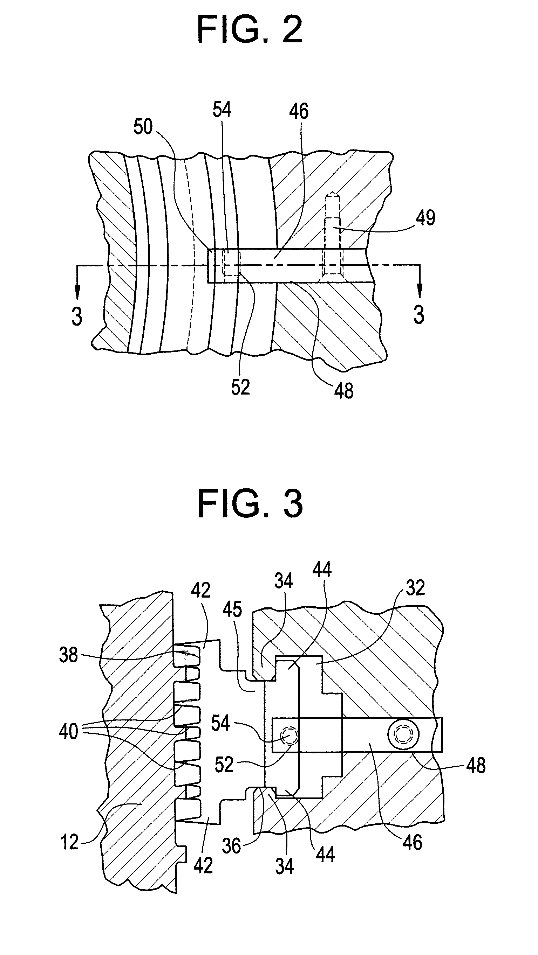

As further illustrated in Figures 2 and 3, each packing ring segment has a sealing face 38 and radially projecting teeth 40, each sealing face 38 is formed by a pair of segment sealing flanges 42 extending axially away from one another. The radial outer portions of the packing ring segments include segment locating flanges 44 which similarly extend from the packing ring segment in axially opposite directions away from one another. An axially reduced neck 45 extends between the segment sealing flanges 42 and the segment locating flanges 44. The packing ring segments are disposed in a generally dovetail-shaped annular groove 32 within the diaphragm 14. The annular groove 32 is defined along the radially innermost portions of the diaphragm 14 by a pair of diaphragm locating flanges 34 (illustrated in Figure 3) which extend axially toward one another defining a slot 36 therebetween. The packing ring segments are positioned such that the axially reduced neck 45 of the packing ring segments is fitted within the diaphragm slot 36.

Additionally, a pair of seal keys 46 are installed at the outermost radial positions of the packing ring segments at the midline between the first diaphragm half 16 and the second diaphragm half 18. The seal keys 46 are secured, for example, by bolts 49, to the first diaphragm half 16 in diaphragm slot 48 and projects radially inwardly to extend into packing ring segment slot 50 formed along an end, adjacent to the midline between the first diaphragm half 16 and the second diaphragm half 18, of each of the packing ring segments. In other words, each of the packing ring segments define one half of the packing ring segment slot 50, more specifically, the first 22 and fourth 28 packing ring segments define one segment slot 50 and the second 24 and third 26 packing ring segments define the other diametrically opposed segment slot 50.

The seal keys 46 support the first 22 and second 24 packing ring segments against circumferential displacement under gravity forces. The seal keys 46 further prevent the first 22 and second 24 packing ring segments from applying forces, resulting from circumferential displacement, on the third 26 and fourth 28 packing ring segments. The seal keys 46 contain the first 22 and second 24 packing ring segments within the first diaphragm half 16 and therefore the seal keys 46 also minimize the gap between the first 22 and second 24 packing ring segments. Additionally the seal keys 46 allow for horizontal displacement (the horizontal direction is defined as the horizontal plane of Figures 1 and 2 formed by the midline between the first and second diaphragm halves and the central axis of the turbine shaft 12) of the first 22 and second 24 segments while allowing radial displacement for the third 26 and fourth 28 segments. Radial displacement in the third 26 and fourth 28 packing ring segments allows for greater radial clearance at the lower half vertical centerline of the turbine shaft 12, where turbine shaft 12 bowing is the greatest.

The seal keys 46 further comprise a threaded hole 52 for engagement of a setscrew 54. The threaded hole 52 is oriented such that adjustment of the setscrew 54 results in displacement of the first 22 or second 24 packing ring segment. As the setscrew 54 is adjusted to extend beyond the seal key 46, the exposed setscrew 54 end comes into contact with the packing ring segment and drives the packing ring segment circumferentially away from the seal key 46. Adjustment of the first 22 and/or second 24 packing ring segment allows for proper alignment of all packing ring segments into true center positions.

The above mentioned characteristics allow for the packing ring assembly 20 and seal keys 46 to be entirely enclosed in their respective diaphragm halves thus preventing assembly problems. Further, the packing ring assembly 20 and seal keys 46 may be installed and utilized with any existing dovetail size and any existing diaphragm assembly. Therefore, the packing ring assembly 20 and seal keys 46 may be installed in existing industrial steam turbines with little or no modification to diaphragm components. Additionally, the packing ring assembly 20 and seal keys 46 may be retrofitted into existing steam turbines. The packing ring assembly 20 and seal keys 46 may be provided as a kit having the desired parts and hardware to easily remove the existing packing ring assembly from the diaphragm and replace it with the packing ring assembly 20 and seal keys 46, with little or no modifications to the diaphragm, at a maintenance interval or overhaul of the steam turbine.

While the invention has been described with reference to a preferred embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

Parts List

| | |
|---|---|
| 10 | Steam turbine |
| 12 | Turbine shaft |
| 14 | Turbine diaphragm |
| 16, 18 | Second diaphragm halves |
| 20 | Packing ring assembly |
| 22 | First packing ring segment |
| 24 | Second packing ring segment |
| 26 | Third packing ring segment |
| 28 | Fourth packing ring segment |
| 30 | Springs |
| 32 | Dovetail-shaped annular groove |
| 34 | Flanges |
| 36 | Slot |
| 38 | Sealing face |
| 40 | Projecting teeth |
| 42 | Sealing flanges |
| 44 | Segment locating flanges |
| 45 | Axially reduced neck |
| 46 | Seal keys |
| 48 | Diaphragm slot |
| 50 | Ring segment slot |
| 52 | Threaded hole |
| 54 | Setscrew |

## Claims

1. A packing ring assembly (20) comprising:
a first packing ring segment (22) and a second packing ring segment (24) disposed within a first half of a stationary component;
a third packing ring segment (26) and a fourth packing ring segment (28) disposed within a second half of a stationary component; and,
one or more seal keys (46) disposed at a midline between the first half and the second half of the stationary component wherein each of the seal keys (46) supports the first or second packing ring segment (22,24).

2. The packing ring assembly (20) of claim 1 wherein each of the one or more seal keys (46) is fastened to the first half of the stationary component.

3. The packing ring assembly (20) of claim 1 or claim 2 wherein each of the one or more seal keys (46) further comprises a threaded hole (52), adjacent to the first or second packing ring segment (22,24), and a set screw engaged with the threaded hole (52).

4. The packing ring assembly (20) of any preceding claim wherein the one or more seal keys (46) is two seal keys (46).

5. A steam turbine (10) comprising:
a shaft;
a stationary component;
a packing ring assembly (20) having a first packing ring segment (2) and a second packing ring segment (24) disposed within a first half of the stationary component and a third packing ring segment (26) and a fourth packing ring segment (28) disposed within a second half of the stationary component; and,
one or more seal keys (46) disposed at a midline between the first half and the second half of the stationary component wherein each of the seal keys (46) supports the first or second packing ring segment (22,24).

6. The steam turbine (10) of claim 5 wherein the first and second halves of the stationary component further comprise a pair of radial slots (36) disposed at the midline between the first and second halves of the stationary component.

7. The steam turbine (10) of claim 5 or claim 6 wherein the first and fourth packing ring segments (22,28) each further comprise one half of a slot (36) to form a slot (36) in register with one of the stationary component slots (36).

8. A method for maintaining proper operation of a labyrinth seal between a rotor shaft and a stationary component of a rotary machine, the method comprising:
attaching a first packing ring segment (22) and a second packing ring segment (24) to a first half of a stationary component;
attaching a third packing ring segment (26) and a fourth packing ring segment (28) to a second half of a stationary component; and,
attaching one or more seal keys (46) to the first half of the stationary component wherein each of the seal keys (46) supports and contains the first or second packing ring segment (22,24) within the first half of the stationary component and permits the third or fourth packing ring segments (26,28) to travel radially from the rotor shaft within the second half of the stationary component.

9. The method of claim 8 wherein the attaching of the one or more seal keys (46) further comprises disposing the seal keys (46) such that the first or second packing ring segment (22,24) is prevented from applying forces on to the third or fourth packing ring segments (26) (28).

10. The method of claim 8 or claim 9 wherein the attaching of the one or more seal keys (46) further comprises fastening the seal keys (46) to the first half of the stationary member.
